# EUROPEAN PATENT APPLICATION

(11) **EP 1 102 174 A1**
(43) Date of publication of application: **23.05.2001**
(21) Application number: 99123024.4
(22) Date of filing: 19.11.1999
(51) Int. Cl.: G06F 15/177

(54) **Semiconductor device with non-volatile mode register**

(71) Applicant: Mitsubishi Electric Europe B.V., 40880 Ratingen (DE)
(72) Inventor: Hirokawa, Masayuki, 40237 Düsseldorf (DE); Stampa, Raimund, 46537 Dinslaken (DE)
(74) Representative: Prüfer, Lutz H., Dipl.-Phys.

(57) **Abstract**

It is provided a semiconductor device comprising a central processing unit (1) and a peripheral function circuit (5) communicating with said central processing unit (1) via a bus (2), said peripheral function circuit (5) comprising a non-volatile programmable storing means (31). By providing the non-volatile programmable storing means it is possible to set the desired initial values which are set during a reset operation.

## Description

The present invention relates to a semiconductor device and in particular to a semiconductor device comprising a central processing unit and a peripheral function circuit communicating with the central processing unit via a bus.

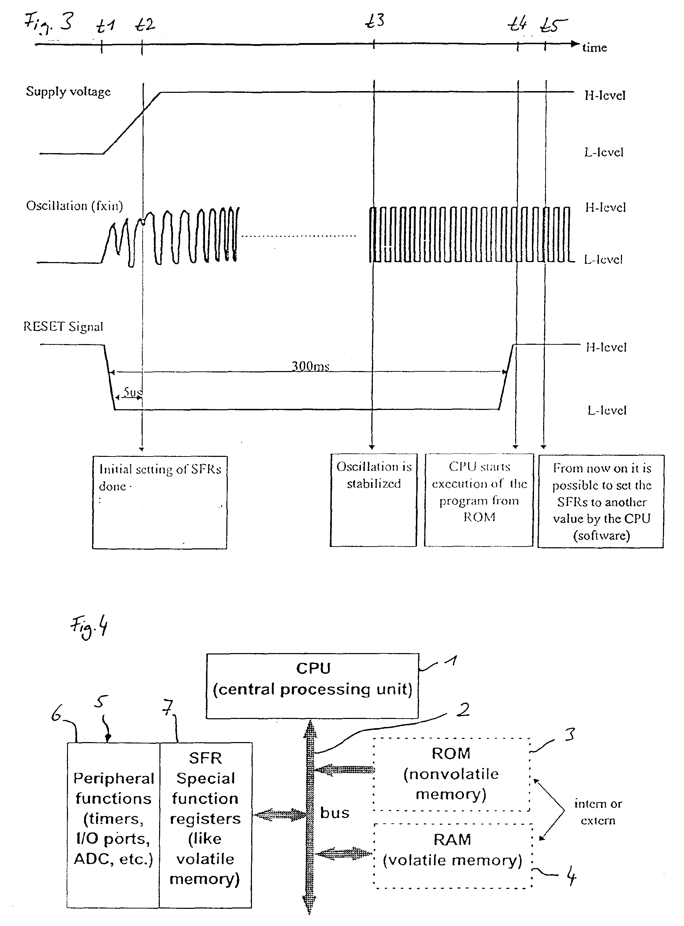

An example for such a semiconductor device is a microcontroller as shown in Fig. 4. The microcontroller comprises a CPU (central processing unit) 1, an address/data bus 2, a ROM (read only memory) 3; and a RAM (random access memory) 4. The ROM 3 and the RAM 4 can be internal memories integrated on the same chip as the CPU 1 or external memories formed on a separate chip. The microcontroller further comprises a peripheral function circuit 5 comprising functional blocks 6, i.e. peripheral functions such as timers, input/output ports analog/digital converters, and special function registers (SFR) 7. The special function registers 7 are used to control the peripheral functions of the microcontroller. For example, it can be determined by one special function register 7 whether a specific port is an input port or an output port. By another special function register 7 it can be determined, whether an internal pull-up resistor for a port is switched on or switched off.

The special function registers 7 are volatile registers, i.e. the content of the special function registers 7 is lost during a power-off period of the microcontroller. The CPU 1 can read from and write into the special function registers 7 to control the peripheral functions of the microcontroller during the operation of the microcontroller. The initial values for the special function registers 7 are set during reset after power-on of the microcontroller by hard-wired logic circuit (not shown). Therefore, the initial values are determined by the hard-wired logic circuit which cannot be changed, so that after each reset the same initial values are set.

The provision of the special function registers as volatile registers can have the following disadvantages. Some special function registers are set only once at the beginning of the program and will never be changed later. Therefore, a RAM memory for such a register is not necessary. An example for such a register is an input/output direction selection register or a pull-up resistor configuration register.

Further, the setting of the special function registers by software implies a certain risk, because it must be ensured that the software will be executed in the desired way.

The special function registers can only be changed by software, therefore after reset is completed. Therefore, they are set after each reset by software. This needs time and program memory which is expensive. Furthermore, for some specific function registers, e.g. pull-up resistor registers, the setting after reset is too late and therefore external circuits, e.g. external pull-up resistors, are necessary.

Two proposals are known in order to overcome these drawbacks. The first proposal is a so-called mask option. In the mask option the customer can choose the initial setting of some special function registers by an option during the mask ordering process. However, this has the disadvantage that this is possible only when the customer is ordering a mask microcontroller. Further, the ordered initial setting is fixed. Therefore, it cannot be changed after once done. Further, the setting cannot be changed by the CPU after the reset period.

Therefore, the customer has to order a new mask, if the configuration changes. However, this is very time consuming and expensive. In addition, the use of the peripheral functions is restricted.

The second proposal is a so-called fuse option. The setting of some special function registers is controlled by so-called fuse bits. These bits can be programmed only once, for example by cutting a connection with a laser beam. The fuse option has the disadvantages that the customer needs to program the fuse bits according to their individual setting. This is time consuming and causes increased costs. Further, the initial setting programmed by fusing is fixed. It cannot be changed once it is done. Nor can it be changed by the CPU after the reset period. This restricts the use of the peripheral functions and causes increased costs if a change of the setting is necessary.

It is therefore an object of the present invention to provide an improved semiconductor device overcoming the above mentioned drawbacks.

The object is solved by the semiconductor device of claim 1.

Further developments of the invention are given in the dependent claims.

Further objects, features, and advantages of the present invention are comprehensible from the following description of an embodiment of the invention in connection with the Figures, in which:
- Fig. 1: shows a block diagram of a microcontroller according to the present invention,
- Fig. 2: shows a block diagram of an input/output port of the microcontroller of Fig. 1,
- Fig. 3: shows a timing diagram of the reset operation, and
- Fig. 4: shows a block diagram of a known microcontroller.

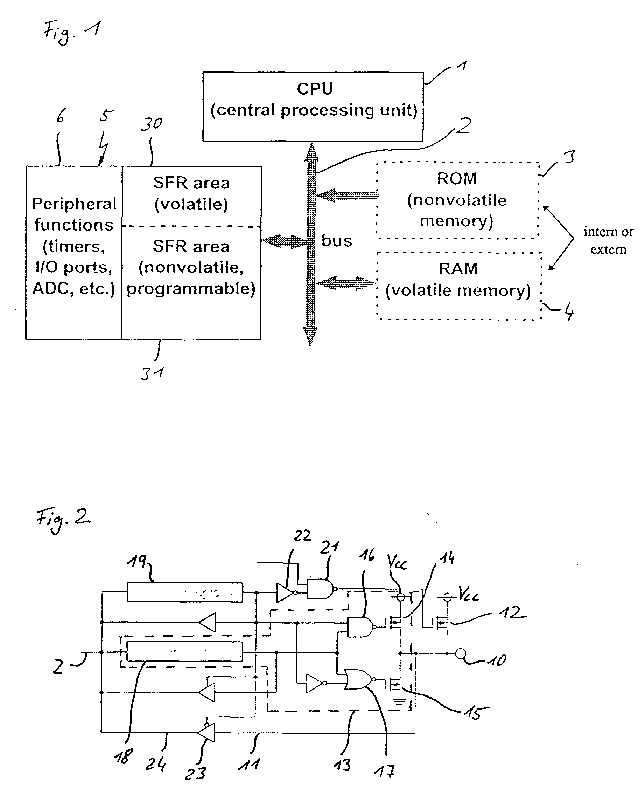

Fig. 1 shows the block diagram of a microcontroller according to the present invention. The portions of the microcontroller shown in Fig. 1 which are the same, or basically the same as those of the microcontrollers of Fig. 4 are designated by the same reference numerals. For the description of those portions it is referred to the corresponding description of Fig. 4.

Different from the microcontroller shown in Fig. 4 the microcontroller according to the present invention, shown in Fig. 1, comprises two kinds of special function registers (SFR), namely first special function registers 31 which are non-volatile programmable registers and second special function registers 30 which are volatile registers. The first special function registers 31 may be formed for example as flash memory cells, EEPROM memory cells or EPROM memory cells. Since the first special function registers 31 are non-volatile and programmable, the customer can configure the required setting of the first special function registers 31 and the first special function registers 31 are initialized during the reset operation after power-on in the desired way.

Further, it is possible to reprogram those settings many times and to change them after the reset operation. For example, if the flash technology or the EEPROM technology is used, the reprogramming can be carried out by the CPU 1. Further, in the case of using the flash technology, it is even possible to reprogram the setting during the program execution by the CPU 1, so that the use of the peripheral function is not restricted and the configuration is not fixed.

Fig. 2 shows an input/output port as an example for a functional block 6, a function thereof being controlled by special function registers. The input/output port comprises an output portion 13 connected to an input/output terminal 10 and a data bus 2. The output portion 13 comprises a PMOS transistor 14 connected to power supply voltage Vcc and the input/output terminal 10, and an NMOS transistor 15 connected to ground and the input/output terminal 10. The gate of the PMOS transistor 14 is connected to an output of a NAND gate 16. The gate of the NMOS transistor 15 is connected to an output of a NOR gate 17. One input of the NAND gate 16 and one input of the NOR gate 17 are connected in common to an output of a port latch 18. An input of the port latch 18 is connected to the data bus 2. The other input of the NAND gate 16 is connected to a direction register 19. The other input of the NOR gate 17 is connected to the direction register 19 through an inverter 20. The direction register 19 can be one bit of a special function register. The content of the direction register 19 is used for determining whether the input/ output port is an input port (first mode of the input/output port) or an output port (second mode of the input/output port).

The input/output terminal 10 is connected to the data bus 2 through a first input line 11, an input gate 23 controlled by the direction register 19, and a second input line 24. The first input line 11 is electrically connected with the second input line 24 through the input gate 23 when the input/output port is used as input port. Further, the input/output terminal 10 is connected to a power supply voltage Vcc through a PMOS pull-up transistor 12.

The gate of the pull-up transistor 12 is connected to an output of a NAND gate 21. One input of the NAND gate 21 is connected to the direction register 19 through an inverter 22. The other input of the NAND gate 21 receives a pull-up selection signal. The pull-up selection signal can be one bit of a special function register.

The structure of the input/output port is designed such that either the output portion 13 is electrically connected with the data bus 2 and the input/output terminal 10 or the input/output terminal 10 is electrically connected with the data bus 2 through the first and second input lines 11, 24 and the input gate 23. Further, if the input/output terminal 10 is electrically connected with the data bus 2 through the first and second input lines 11, 24 and the input gate 23, it is possible to switch on or switch off the pull-up transistor 12 (third or fourth mode of the input/output port) in response to the pull-up selection signal. If the pull-up transistor 12 is switched on it operates as a pull-up resistor.

The pull-up resistor is needed to pull the signal applied to the input/output terminal 10 to a defined level. Otherwise, the signal level at the input/output terminal 10 would be floating, if the applied signal is not driven to a certain level by the device generating the applied signal. However, such a floating signal and therefore a floating input/output terminal must be avoided since such a floating input/output terminal can cause device damages, e.g. by electrostatic pulses or so-called latch-up effects, since no defined current path is provided for the input/output terminal 10. If the pull-up transistor 12 is switched on a defined current path is provided from the input/output terminal 10 to the power supply voltage Vcc through the pull-up transistor 12 to avoid such damages. Therefore, the pull-up transistor 12 should to be switched on.

However, during reset operation normally all pull-up transistors are switched off in order to avoid the situation that a pin of another device connected to an input/output port of the microcontroller receives a high level signal activating the other device during the reset of the microcontroller which can cause malfunctions.

Fig. 3 shows such a reset operation after power-on. At a time tl the microcontroller is turned on, i.e. the supply voltage Vcc starts increasing from an L-level (low level) to an H-level (high level). In response to this increase the reset signal starts decreasing from the H-level to the L-level. Further, an oscillator generating a clock signal for the CPU 1 begins to oscillate. Since the first special function registers 31 are non-volatile programmable registers storing their values even at power-off, the first special function registers 31 are already set at the time t2 of power-on. At a time t2 the second special function registers 30 are set to their initial values. The initial values of the second special function registers 30 are predetermined by hard-wired circuits (not shown). At a time t3 the oscillation frequency of the oscillator is stable. Since the CPU 1 needs a stable oscillation frequency to operate without malfunctions the reset operation is extended to a time t4 in order to ensure that the CPU 1 always receives a stable frequency after reset. After the time t4 (at a time t5) it is possible to change the values of the special function registers for the first time after reset. This is done by the CPU 1 according to the software in ROM 3 and/or RAM 4. Therefore, there is a time interval between t2 and t4 during which the values of the special function registers 30, 31 cannot be changed.

However, as explained above, the pull-up resistors should be switched on at input ports during reset for avoiding malfunctions caused by electrostatic discharge or latch-up effects. Since changing the initial values of the special function registers 30, 31 is not possible before time t5, there exists the possibility that the microcontroller is damaged.

However, according to the present invention, the special function registers for input/output ports which are to be connected to pins of another device can be formed as the non-volatile programmable special function registers 31, for example. These first special function registers 31 can be set such that the initial values (which are the set values) determine that the respective pull-up transistors of the input/output ports operating as input ports are switched on.

If the first special function registers 31 are used for the pull-up resistors, external pull-up resistors are not required anymore, since the first special functions registers 31 are correctly set at the time of power-on. This saves costs of the components, of the assembly and of the space needed on the board. Further, the space needed on the board is reduced. In addition, the software is not needed for the initialization so that less program memory is required.

Further, also the special function register for the direction register 19 can be formed as a first special function register 31, since the direction register 19 is usually set only once. In this case there is no software needed for setting the direction register 19 after reset so that less program memory is required.

However, it is still possible to initialize the first special function register 31 by software, if it is desired.

In a further embodiment of the invention the special function registers are formed as non-volatile and programmable registers which are applied to digital signal processors (DSP), which have a similar internal structure as microcontrollers but which are especially designed for processing digital filtering tasks, for example speech processing, speech compression, image processing. Further, the provision of special function registers as non-volatile and programmable register can also be applied to application specific standard product (ASSP) which can include a microcontroller or a part similar to a microcontroller and other application specific function blocks, for example digital or analog blocks. Further, it can be applied to an application specific integrated circuit (ASIC) which is similar to ASSP. In contrast to ASSP, which can be used by many customers, the ASIC is specially designed for one customer.

## Claims

1. Semiconductor device comprising
a central processing unit (1) and
a peripheral function circuit (5) communicating with said central processing unit (1) via a bus (2),
characterized in that said peripheral function circuit (5) including a non-volatile programmable storing means (31).

2. Semiconductor device according to claim 1, wherein
said non-volatile programmable storing means (31) is a first mode-select storing means (31) for storing a first or a second value and wherein said peripheral function circuit (5) comprises a first functional block (6) operating in a first mode or in a second mode in response to said value stored in said first mode select storing means (31).

3. Semiconductor device according to claim 2, wherein
said first functional block (6) is an input/output port structure having an input/output terminal (10) and connecting means for connecting said input/output terminal (10) to a power supply line receiving a predescribed potential (Vcc) in said first mode and for disconnecting the connection between said input/output terminal (10) and said power supply line in said second mode.

4. Semiconductor device according to claim 3, wherein
said connection means comprises a resistor or a transistor (12).

5. Semiconductor device according to one of the claims 2 to 4, wherein
said peripheral function circuit (5) comprises a plurality of said first functional blocks (6) and a plurality of said non-volatile programmable storing means (31).

6. Semiconductor device according to claim 5, wherein
said plurality of non-volatile programmable storing means (31) are formed as registers.

7. Semiconductor device according to one of the claims 1 to 6, wherein
said non-volatile programmable storing means (31) is formed as a flash memory cell, as an EEPROM memory cell or as an EPROM memory cell.

8. Semiconductor device according to one of the claims 1 to 7, wherein
said peripheral function circuit (5) comprises at least one second mode-select storing means (30) for storing a first or a second value and at least one second functional block (6) operating in a first mode or in a second mode in response to said value stored in the second mode select storing means (30),
said at least one second mode-select storing means (30) is formed as a volatile storing means.
